# FASCICULE DE BREVET EUROPEEN

(11) **EP 3 453 955 B1**
(45) Date de publication et mention de la délivrance du brevet: **22.07.2020**
(21) Numéro de dépôt: 18193742.6
(22) Date de dépôt: 11.09.2018
(51) Int. Cl.: F21V 5/04, F21S 41/143, F21S 41/20, F21S 41/265, F21S 41/275, F21S 43/20

(54) **MODULE LUMINEUX POUR L'ECLAIRAGE ET/OU LA SIGNALISATION D'UN VEHICULE AUTOMOBILE**
LEUCHTMODUL ZUR BELEUCHTUNG UND/ODER SIGNALISIERUNG EINES KRAFTFAHRZEUGS
LIGHT-EMITTING MODULE FOR LIGHTING AND/OR SIGNALLING OF A MOTOR VEHICLE

(30) Priorité: 12.09.2017 FR 1758437
(43) Date de publication de la demande: 13.03.2019
(73) Titulaire: Valeo Vision, 93012 Bobigny Cedex (FR)
(72) Inventeur: LEFAUDEUX, Nicolas, 93012 BOBIGNY Cedex (FR); DUBOSC, Christophe, 93012 BOBIGNY (FR); MBATA, Samira, 93012 BOBIGNY Cedex (FR); BARILLOT, Thibaud, 93012 BOBIGNY Cedex (FR)
(74) Mandataire: Valeo Vision

(56) Documents cités:
- EP-A1- 0 806 604
- WO-A1-2016/041983
- DE-A1- 19 519 872
- DE-A1-102012 021 163
- FR-A1- 2 770 618
- US-A- 6 152 589
- US-A1- 2015 138 821

## Description

Le domaine technique de l'invention est celui des modules lumineux, pour l'éclairage et/ou la signalisation de véhicule automobile.

Les véhicules automobiles sont équipés de module lumineux, permettant la projection d'un faisceau permettant l'éclairage de la route sur laquelle le véhicule progresse, ou encore la signalisation du véhicule à un usager tiers de la route.

Ces modules lumineux comportent en général au moins une source lumineuse ainsi qu'au moins un élément de déviation optique agencé pour dévier les rayons lumineux émis par la source lumineuse vers au moins une lentille de mise en forme de façon à obtenir un faisceau lumineux répondant à la fois aux besoins de l'utilisateur du véhicule et aux normes réglementaires, qu'il soit de signalisation ou d'éclairage. La mise en forme des rayons lumineux en un faisceau lumineux est effectuée par un ou plusieurs éléments optiques tels que des lentilles de mise en forme.

Le document EP 0 806 604 A1 décrit un module selon le préambule de la revendication 1.

On connait des lentilles convergentes, par exemple sphériques ou asphériques, aptes à transformer efficacement les rayons passant par la lentille en un faisceau lumineux réglementaire. Ce type de lentilles impose une forme globale déterminée pour le module lumineux, avec en particulier une épaisseur de l'ordre de quelques millimètres au bord de la lentille et de plusieurs dizaines de millimètres au centre. Cette forme globale peut être imposante et occuper un espace important sur le véhicule, notamment si plusieurs modules lumineux sont utilisés, ou si une forme particulière est recherchée. De plus, l'utilisation de telle lentille convergente limite drastiquement les modifications possibles de contour de la lentille et des faces de sortie de rayons des modules lumineux, alors que la forme des projecteurs, qui sont des éléments importants de la signature visuelle propre à chaque modèle de véhicule, peut être amenée à prendre des formes de plus en plus effilées.

L'invention objet du présent document a pour objectif de proposer un module lumineux qui satisfait de façon efficace les problématiques d'éclairage et/ou de signalisation répondant aux normes règlementaires, les problématiques de compacité et les problématiques de style.

Dans ce but, la présente invention propose un module lumineux pour l'éclairage et/ou la signalisation d'un véhicule automobile, comportant au moins un ensemble émetteur de lumière et une lentille de mise en forme des rayons émis par l'ensemble émetteur, ladite lentille comportant une face d'entrée des rayons tournée vers l'ensemble émetteur et une face de sortie opposée à la face d'entrée, la lentille de mise en forme des rayons étant une lentille plate, ladite lentille et l'ensemble émetteur étant configurés de manière à ce que la face de sortie comporte une première portion et une deuxième portion se distinguant par la quantité de rayons lumineux sortant de la lentille par l'une ou l'autre des portions de sorte que la première portion forme une portion optique d'éclairage et que la deuxième portion forme une portion neutre pour l'éclairage, la deuxième portion s'étendant depuis la première portion de manière à présenter une plus grande dimension qui soit supérieure à l'épaisseur de la lentille plate, caractérisé en ce que la face de sortie de la lentille comporte des motifs sur la totalité de sa surface.

La première portion de la face de sortie est une portion optique d'éclairage en ce qu'une grande majorité, par exemple au moins 90%, du flux lumineux total émis par l'ensemble émetteur pour réaliser une fonction d'éclairage règlementaire traverse la lentille dans cette portion de la face de sortie.

La deuxième portion de la face de sortie est une portion neutre pour l'éclairage en ce sens que la deuxième portion est dite neutre pour l'éclairage dès lors qu'une minorité, par exemple moins de 10%, du flux lumineux total émis par l'ensemble émetteur pour réaliser une fonction d'éclairage règlementaire traverse la lentille dans cette portion de la face de sortie. Plus particulièrement, moins de 5% des rayons lumineux 9 émis par l'ensemble émetteur atteignent une deuxième portion 36 de la lentille 10, alors que la surface sur laquelle s'étend la deuxième portion est au moins égale à 30% de la surface sur laquelle s'étend la première portion.

On définit une plus grande dimension de la deuxième portion comme sa plus grande dimension, dans le plan de la lentille, depuis un bord de la première portion optique jusqu'à un bord de la lentille plate. Le rapport entre cette plus grande dimension et les dimensions de la lentille dans son ensemble est tel que la deuxième portion neutre pour l'éclairage consiste selon l'invention en une prolongation de la portion optique au-delà de la portée des rayons émis par l'ensemble émetteur et déviés à l'intérieur de la lentille, et non à un pourtour de la portion optique traitant optiquement les rayons les plus divergents. Il en résulte que selon l'invention, les motifs disposés sur la face de sortie au niveau de la deuxième portion ont bien une fonction esthétique et n'impactent pas la fonction optique réalisée par les rayons émis par l'ensemble émetteur. Ainsi, on peut jouer avantageusement sur la forme de cette deuxième portion, qui n'impacte pas la fonction optique d'éclairage assurée par la combinaison de l'ensemble émetteur et de la première portion de la lentille.

Par ensemble émetteur, on comprend que le module lumineux peut comporter une ou plusieurs sources de lumière formant un même ensemble émetteur, positionné par rapport au foyer objet de la lentille plate, et le cas échéant associé à un réflecteur, pour diriger les rayons de façon appropriée sur la face d'entrée de la lentille, afin que les rayons émis par cet ensemble émetteur sortent principalement par la première portion de la face de sortie de la lentille.

Par lentille plate, ou peu bombée, on entend une lentille dont l'épaisseur moyenne est faible par rapport au diamètre, ou par rapport à la plus grande dimension dans le plan d'allongement principal de la lentille. En d'autres termes, une lentille est plate, ou peu bombée selon la variation d'épaisseur de la lentille, l'épaisseur moyenne est d'une valeur inférieure à 20 % dudit diamètre ou de ladite plus grande dimension, alors que le même ratio pour une lentille convergente, sphérique ou asphérique, est de l'ordre de 50%.

Ainsi, on peut avec une unique lentille réaliser une fonction purement optique, via la première portion, et une fonction essentiellement esthétique, via la deuxième portion. L'utilisation d'une lentille plate permet d'obtenir plus facilement une portion essentiellement esthétique de grande dimension, le cas échéant courbé pour suivre un galbe d'aile dans lequel est inséré un projecteur, étant entendu que ce résultat serait impossible à obtenir avec une lentille habituelle sans augmenter l'épaisseur au centre de la lentille et donc l'encombrement, le poids et le coût.

De plus, les motifs mis en œuvre sur la lentille plate pour la réalisation de la fonction optique sont réalisés également sur le reste de la lentille plate pour un effet esthétique visant à donner à l'observateur une impression de continuité.

Selon différentes caractéristiques du module lumineux selon l'invention, prises séparément ou en combinaison :
- l'ensemble émetteur et la lentille sont configurés de manière à ce que les rayons émis par l'ensemble émetteur impactent une portion réduite de la face d'entrée de la lentille. Par portion réduite, on comprend que les rayons émis par l'ensemble émetteur n'impactent pas la totalité de la face d'entrée mais seulement une zone spécifique, la dimension de cette zone spécifique d'impact des rayons sur la face d'entrée étant fonction de la dimension à donner à la première portion de la face de sortie,
- les motifs s'étendent de façon continue sur la face de sortie de la lentille. Par de façon continue, on comprend ici qu'un motif est en contact avec au moins un motif adjacent quelle que soit la portion considérée. Ainsi, les motifs sont agencés selon une série continue ente première et deuxième portion, sans transition entre la première portion et la deuxième portion. A titre d'exemple, dans ce contexte, on pourra prévoir que les motifs de la première portion soient les mêmes que ceux de la deuxième portion, ou bien que l'évolution, par la forme ou l'espacement entre les motifs, au fur et à mesure de l'éloignement de l'axe optique de la lentille soit continue jusqu'au bord de la lentille,
- les motifs sont d'un premier type dans la première portion et d'un deuxième type dans la deuxième portion, le premier type et le deuxième type de motifs variant selon la nature, la forme géométrique et la taille des motifs,
- les motifs du premier type présentent une structure de Fresnel, c'est-à-dire qu'ils présentent la forme de prismes dont la dimension et l'inclinaison sont définies en fonction de la puissance optique de la lentille sphérique ou asphérique qu'ils permettent de remplacer. Notamment, ces prismes peuvent présenter des faces de profil courbe ou droit selon la puissance optique que l'on souhaite donner à la lentille,
- les motifs du deuxième type forment un grainage de la deuxième portion de la face de sortie,
- l'ensemble des motifs présente une structure de Fresnel, les motifs du deuxième type présents dans la deuxième portion comportant une valeur d'inclinaison de leur faces différente de celle des motifs du premier type présents dans la première portion. De la sorte, on peut jouer sur la quantité de réflexion ou réfraction des rayons dans la deuxième portion ayant une fonction esthétique, ou on peut définir une puissance optique divergente dans cette deuxième portion plutôt que la puissance optique convergente privilégiée dans la première portion,
- le pas de la structure de Fresnel est constant sur l'ensemble de la lentille plate,
- la lentille présente une forme extérieure comportant au moins un sommet anguleux, avec une première portion de forme globalement circulaire ou ovale. On comprend que c'est la deuxième portion de la lentille, avec sa fonction neutre pour l'éclairage, qui forme la partie anguleuse de la lentille, cette partie effilée pouvant être recherchée pour un effet esthétique par les équipementiers ou constructeurs automobiles,
- au moins un des motifs présents sur la lentille est asymétrique en rotation. Par motifs asymétriques en rotation, on comprend qu'un motif s'étendant à une distance donnée de l'axe optique de la lentille, n'est pas invariant par rotation autour d'un axe de rotation, par exemple l'axe optique. On pourra notamment distinguer les motifs présents sur la première portion de la lentille, dont l'asymétrie en rotation est fonction de l'éblouissement potentiel d'un usager de la route que le module lumineux participe à éclairer, et les motifs présents sur la deuxième portion de la lentille, dont l'asymétrie en rotation vise à donner une signature visuelle au module lumineux. A titre d'exemple, au moins un des motifs présents sur la deuxième portion de la lentille est asymétrique en rotation, de sortie que ce motif suit autour de l'axe de rotation précédemment défini des courbes complexes qui ne sont pas des arcs de cercle, au moins une partie de la face de sortie est recouverte d'un dispositif de modification de la transmission de la lumière. Ce dispositif de modification de la transmission de la lumière peut par exemple être un élément actif du type écran à cristaux liquides ou paroi de vitre dynamique, ou bien consister en un masque qui permet un rendu visuel spécifique. Le dispositif peut ainsi être disposé sur la première portion ou sur la deuxième portion, à l'interface entre ces deux portions ou encore sur la totalité de la face de sortie de la lentille. Alternativement, un premier dispositif peut recouvrir la première portion tandis qu'un deuxième dispositif des rayons recouvre la deuxième portion,
- la face d'entrée des rayons est convexe. On comprend ici que l'on définit la convexité d'une face d'entrée ou de sortie par rapport à la lentille elle-même, c'est-à-dire par rapport à une couche centrale de celle-ci ; en d'autres termes, la face d'entrée de la lentille est convexe en ce qu'elle présente un profil courbe vers l'extérieur de l'élément optique de correction : la partie centrale de la face d'entrée est ainsi plus à l'extérieur de cette lentille que ne le sont les bords de cette face d'entrée,
- le module lumineux comporte une source de lumière additionnelle disposée en regard de la lentille de manière à être située dans l'axe de la deuxième portion,
- le module lumineux comporte une optique de mise en forme des rayons entre ladite source de lumière additionnelle et la deuxième portion de la lentille. La combinaison d'une optique de mise en forme et de cette source de lumière additionnelle peut permettre par exemple la réalisation d'une fonction de signalisation, et par exemple de feu de circulation diurne,
- la lentille est inclinée par rapport à un plan perpendiculaire à l'axe optique. Notamment, la lentille peut présenter une valeur d'angle d'inclinaison allant jusqu'à 10°.

La présente invention concerne également un projecteur de véhicule automobile comportant un module lumineux tel que décrit précédemment, le projecteur comportant un boîtier pour loger au moins ce module lumineux, ledit boîtier étant fermé d'une glace de protection.

D'autres caractéristiques et avantages de la présente invention apparaitront plus clairement à l'aide de la description et des dessins parmi lesquels :
- la figure 1 est une vue de face d'un véhicule comportant un projecteur de véhicule automobile selon l'invention,
- la figure 2 est une vue en perspective d'un projecteur de véhicule selon l'invention, comportant deux modules lumineux,
- la figure 3 est une vue de face d'un des modules lumineux de la figure 2, une partie du boitier ayant été retirée pour rendre visibles les composants internes du module,
- la figure 4 est une vue de côté du module lumineux de la figure 3,
- la figure 5 est un éclaté du module lumineux illustré sur les figures 3 et 4, rendant notamment visible une lentille de mise en forme spécifique selon un aspect de l'invention,
- la figure 6 est une vue en perspective d'une lentille de mise en forme rendant visibles les motifs,
- la figure 7 est une vue de dessus de la lentille de mise en forme et de l'ensemble émetteur, le trajet des rayons émis par la lentille ayant été représenté pour permettre la distinction entre la partie optique d'éclairage et la partie neutre sur la lentille plate,
- la figure 8 est une vue de face de la lentille de mise en forme permettant d'illustrer une tâche lumineuse dans la portion optique.

Il faut tout d'abord noter que si les figures exposent l'invention de manière détaillée pour sa mise en œuvre et qu'elles peuvent servir à mieux définir l'invention le cas échéant, ces figures n'exposent qu'une partie des exemples de réalisation possibles selon l'invention.

Dans la suite de la description, les dénominations axiales, longitudinales, verticales et transversales se réfèrent à un axe correspondant à la direction générale des rayons émis par la source lumineuse. La direction axiale et la direction longitudinale L correspondent à la direction générale des rayons lumineux émis par la source lumineuse. Le sens avant désigne le sens d'émission des rayons lumineux par la source lumineuse, le sens arrière désignant quant à lui le sens inverse. La direction verticale V correspond à une direction perpendiculaire à la direction longitudinale et au plan dans lequel s'étend majoritairement le véhicule où est installé le module lumineux ou le projecteur selon l'invention. La direction transversale T est la direction perpendiculaire à la direction verticale V et à la direction longitudinale L.

Les directions évoquées ci-dessus sont également visibles dans un trièdre L, V, T représenté sur les figures.

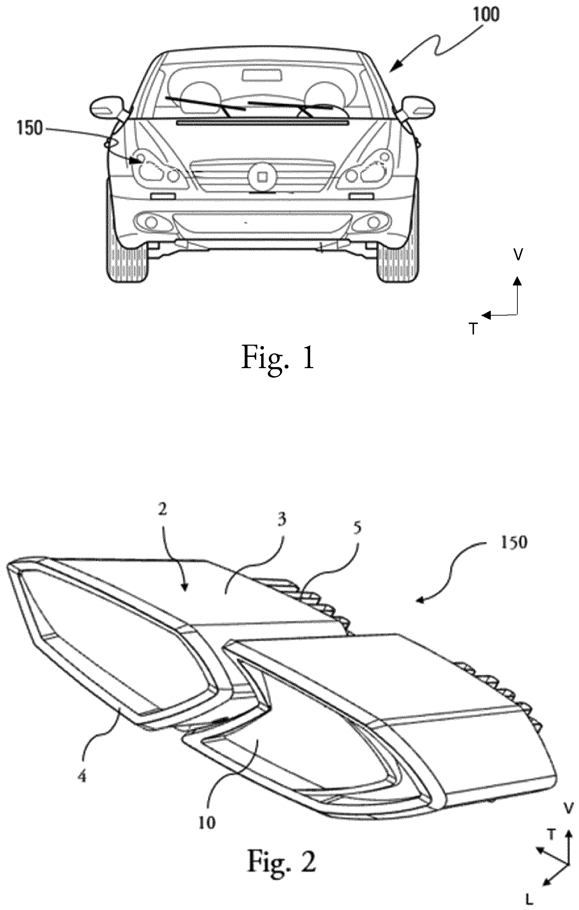

La figure 1 représente un véhicule 100 automobile équipé d'un projecteur 150 selon l'invention. Dans cette disposition, le projecteur 150 permet d'éclairer la route devant le véhicule 100 et/ou de signaler la présence du véhicule à d'autres utilisateurs de la route. Le projecteur 150 est ici agencé sur la face avant du véhicule 100, de chaque côté du véhicule 100, mais on comprendra à la lecture de ce qui suit que le projecteur 150 peut également être utilisé sur d'autres côtés du véhicule 100, notamment l'arrière, et qu'un véhicule 100 peut comprendre une pluralité de projecteurs 150 disposés sur plus d'un côté du véhicule 100.

On a représenté ici une forme élancée du projecteur 150, qui s'étend partiellement sur une aile du véhicule 100. Dans ce projecteur 150, derrière une glace de protection sont agencés trois modules lumineux 1, avec deux modules lumineux de forme ponctuelle et un module lumineux, servant notamment à l'éclairage du véhicule, qui présente une forme plus allongée et qui selon l'invention, tel que cela sera décrit ci-après, est agencé de manière à présenter une portion optique d'éclairage et une portion neutre pour l'éclairage.

La figure 2 illustre un projecteur 150 selon un mode de réalisation de l'invention, particulier en ce qu'il comporte deux modules lumineux 1 selon l'invention, à savoir deux modules lumineux 1 configurés pour que seule une partie d'une lentille 10 de mise en forme soit impactée par les rayons émis par une source lumineuse, telle que cela va être décrit par la suite. Le module lumineux 1 comporte un boitier 2, configuré pour loger différents composants optiques parmi lesquels une lentille 10 de mise en forme de rayons lumineux, et un dissipateur 5. Le projecteur 150 est fermé à l'avant par une glace de protection destiné à protéger le module lumineux 1 et ses éléments constitutifs des insectes et des débris pouvant endommager le projecteur 150 ou l'empêcher de fonctionner correctement.

Le boitier 2 est composé d'une partie supérieure 3 et d'une partie inférieure 4, liées solidairement l'une à l'autre. Notamment, les deux parties sont clipsées l'une sur l'autre, mais d'autres systèmes de fixation peuvent être envisagés.

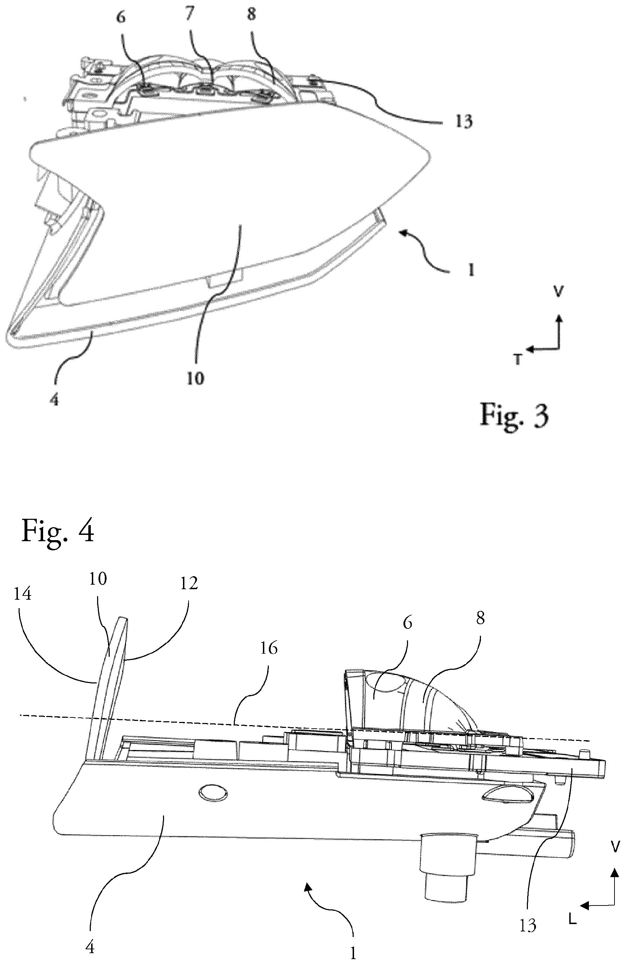

La figure 3 représente le module lumineux 1 sans la partie supérieure 3 du boitier 2 de manière à exposer l'intérieur du module lumineux 1.

Il est ainsi visible que le module lumineux 1 comprend par ailleurs, logé dans le boîtier 2, un ensemble émetteur de lumière, comprenant au moins une source lumineuse 7, disposée au foyer ou au voisinage du foyer d'un réflecteur 8 de forme parabolique ou sensiblement parabolique.

La source lumineuse 7 émet un rayonnement lumineux principalement en direction du réflecteur 8, qui présente une surface réfléchissante permettant le renvoi des rayons vers un foyer image du réflecteur, en direction de la lentille de mise en forme. La source lumineuse 7 utilisée peut-être une source lumineuse à filament, à plasma, à gaz, ou comprendre des éléments électroluminescents tels qu'une diode électroluminescente LED, une diode électroluminescente organique OLED, ou toute source lumineuse répondant aux contraintes du domaine automobile.

Les rayons lumineux 9 réfléchis atteignent ensuite la lentille 10 de mise en forme, au travers de laquelle ils sont déviés de façon à former en sortie de la lentille un faisceau lumineux 11 règlementaire conforme aux souhaits d'un utilisateur du véhicule, autant dans sa forme que sa direction. Le faisceau lumineux 11 est ainsi projeté, par exemple vers l'avant du véhicule 100 pour éclairer la route empruntée ou pour assurer une fonction de signalisation. Le faisceau lumineux 11 obtenu est de type divergent, c'est-à-dire que les rayons lumineux qui le constituent semblent venir du même point. De plus, le faisceau lumineux 11 obtenu est collimaté, c'est-à-dire que les rayons lumineux qui le composent sont parallèles ou quasiment parallèles, ce qui permet d'obtenir un éclairage longue portée homogène et donc plus confortable pour le conducteur du véhicule.

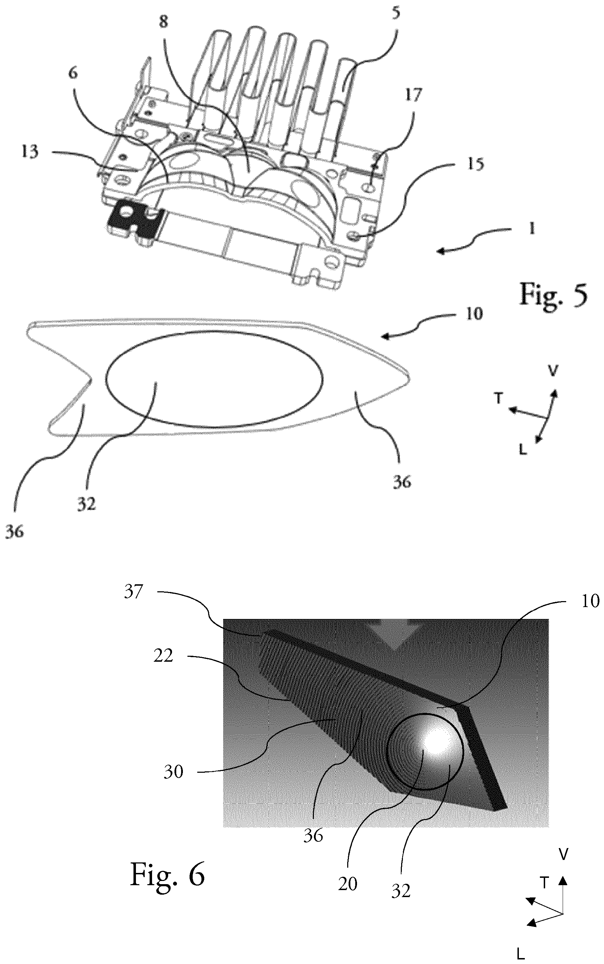

L'ensemble émetteur est disposé sur un socle 13 lui-même positionné sur la partie inférieure 4 du boitier 2. Cette disposition est plus particulièrement visible sur les figures 4 et 5. Le socle 13 comprend une pluralité de trous de fixation 15 correspond à autant de trous de fixation sur l'ensemble émetteur, de façon à sécuriser l'ensemble émetteur sur le socle 13 par un moyen de fixation, par exemple une vis. Le socle 13 comprend également des orifices de fixation 17 permettant de fixer le socle 13 sur le boitier 2 du projecteur 150, et plus particulièrement sur la partie inférieure 4 du boitier 2.

Le dissipateur 5 équipant le projecteur 150 décrit ici est un dissipateur à ailettes, les ailettes transférant la chaleur du dissipateur à l'air environnant le dissipateur 5, ce qui permet de faire baisser la température du dissipateur 5. D'autres types de dissipateur peuvent être envisagés sans trahir l'esprit de l'invention. Le dissipateur 5 est agencé en contact avec le socle 13, le réflecteur 8 étant positionné entre les sources lumineuses 7 et le dissipateur 5. Le socle 13 est constitué d'un matériau permettant le transfert de chaleur entre les sources lumineuses 7 et le dissipateur 5, de manière à permettre l'évacuation de la chaleur de l'ensemble émetteur vers le dissipateur 5 puis vers l'air environnant, ce qui permet en conséquence d'éviter la surchauffe de l'ensemble émetteur. Le matériau utilisé peut être par exemple un métal ou un alliage de métal.

La lentille 10 de mise en forme comprend une face d'entrée 12 des rayons lumineux 9, ainsi qu'une face de sortie 14 des rayons lumineux 9, la face de sortie 14 étant opposée à la face d'entrée 12 par rapport à une couche centrale 36 de la lentille 10. Les rayons lumineux 9 émis par la source lumineuse 2 atteignent la face d'entrée 12, et traversent la lentille 10 pour sortir via la face de sortie 14 de la lentille 10.

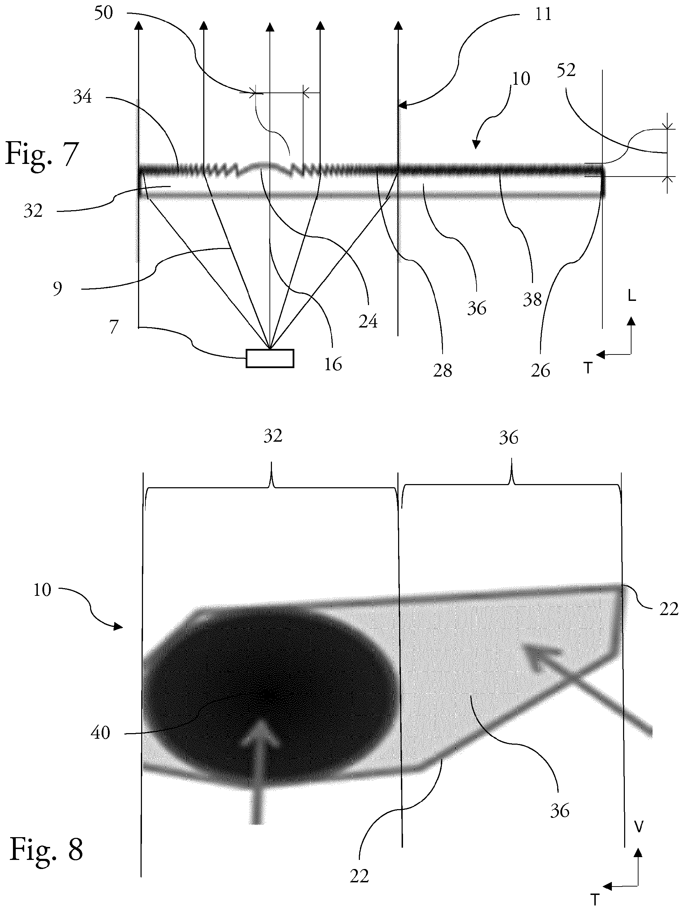

Tel que représenté schématiquement sur les figures 5 et 6 notamment, la lentille 10 de mise en forme comprend deux portions distinctes, à savoir une première portion 32, dite portion optique d'éclairage, et une deuxième portion 36, dite portion neutre pour l'éclairage. La première portion 32 s'étend sensiblement au centre de la lentille et elle est de forme circulaire ou ovale, tandis que la deuxième portion 36 s'étend latéralement par rapport à la première portion 32, le cas échéant de part et d'autre de cette première portion comme visible sur la figure 5, et elle a une forme allongée. On comprend de la représentation éclatée de la figure 5, comme de la représentation schématique de la figure 7, que la lentille de mise en forme est agencée dans le module lumineux selon l'invention de sorte que sa première portion 32 est disposée en regard, relativement à l'axe optique du module lumineux, de l'ensemble émetteur afin que les rayons émis par cet ensemble émetteur traversent principalement cette première portion 32.

Tel que cela est plus particulièrement visible sur les figures 6 et 7, les deux portions comprennent des motifs 30 sur la face de sortie 14 de la lentille 10. La forme et l'agencement des motifs 30 seront détaillés plus avant dans le texte.

La lentille 10 de mise en forme a la forme d'une lentille plate, c'est-à-dire une lentille dont une épaisseur, c'est-à-dire la dimension entre la face d'entrée 12 et la face de sortie 14, est constante ou sensiblement constante sur l'ensemble de la lentille 10. De plus, l'épaisseur de la lentille est faible par rapport à la plus grande dimension de la face de sortie 14, selon un rapport inférieur à 1 pour 5. Ainsi, la lentille 10 plate s'étend majoritairement au sein d'un plan.

La face d'entrée 12 de la lentille est convexe, c'est-à-dire qu'elle présente un profil courbe, un centre de la face d'entrée 12 étant plus éloignée de la couche centrale 36 qu'une extrémité de la face d'entrée 12. Dans cette disposition, la face d'entrée 12 a une forme bombée.

Dans l'exemple exposé ici, la lentille 10 est de forme polygonale, plus spécifiquement ici un hexagone en forme de pointe de flèche, mais on comprendra à la lecture de ce qui suit que d'autres formes de lentille plate peuvent être envisagées.

La lentille 10 est ici positionnée avec une valeur d'angle d'inclinaison sensiblement égale à 5° par rapport à un plan perpendiculaire à l'axe optique, mais on comprendra que cet agencement est donné ici à titre d'exemple et ne saurait restreindre la portée de l'invention ni même illustré un mode préférentiel de réalisation. Notamment, la lentille 10 peut s'étendre de façon perpendiculaire à un axe 16 qui est confondu avec un axe optique de la lentille 10.

La figure 6 illustre une configuration alternative de lentille 10 de mise en forme des rayons lumineux, différant notamment par sa forme. La lentille 10 présente une caractéristique commune avec la lentille représentée aux figures 2 à 5, en ce qu'elle est une lentille plate à la forme générale effilée, mais présente ici une forme pentagonale.

Tel que cela a été introduit précédemment, la face de sortie 14 d'une lentille 10 de mise en forme conforme à un aspect de l'invention comprend une pluralité de motifs 30. Dans l'exemple illustré sur les figures 6 et 7, ces motifs 30 sont agencé en anneaux ou en portions d'anneaux concentriques autour d'un centre 20 et les motifs 30 ont une section en forme de triangle. Les motifs 30 peuvent notamment présenter une structure de Fresnel, tels qu'ils seront décrits ci-après.

Les motifs 30 sont continus entre le centre 20 et une bordure extérieure 22 de la lentille 10, c'est-à-dire qu'un motif 30 est toujours en contact avec au moins autre motif 30, sans interruption. Un motif 30 est ainsi toujours encadré par deux motifs 30 adjacents, la seule exception étant un motif 30 agencé au centre 20, dit motif central 24, et un motif 30 agencé à la périphérie de la lentille 10, c'est-à-dire en contact avec la bordure extérieure 22 de la lentille 10, dit motif terminal 26. Les motifs 30 disposés entre le motif central 24 et le ou les motifs terminaux 26 sont dits motifs périphériques 28.

Le motif central 24 est de forme sphérique. Ce motif central 24 est positionné sur un axe optique de la lentille 10. Dans l'exemple illustré ici, l'axe optique de la lentille 10 correspond à l'axe 16 illustré sur la figure 4.

Les motifs terminaux 26 et les motifs périphériques 28 peuvent notamment présenter une forme d'anneau ou de portion d'anneau, de section triangulaire ou courbe tel que précédemment évoqué.

L'ensemble des motifs 30 agencés sur la face de sortie 14 de la lentille peut présenter une structure de Fresnel, avec une succession de prismes, agencés concentriquement depuis le motif central 24 jusqu'aux motifs terminaux, avec les motifs agencés dans la deuxième portion 36, latéralement à la première portion 32, qui peuvent présenter une hauteur et une largeur identiques à celles des motifs agencés dans la première portion 32 au plus près de la jonction entre les deux portions. Selon la puissance optique que l'on souhaite donner à la lentille, la section des prismes agencés dans la première portion peut avoir des cotés droits ou bien avoir des cotés courbes ou complexes, et la section des prismes agencés dans la deuxième portion peut présenter ces mêmes profils dans un contexte d'homogénéisation ou de distinction des deux portions de la face de sortie.

Cette disposition confère à la face de sortie 14 une forme de lentille de Fresnel, avec une première portion 32 qui forme une portion optique pour l'éclairage du véhicule, c'est-à-dire sur laquelle sont dirigées les rayons lumineux émis par l'ensemble émetteur, et une deuxième portion 36 qui forme une portion neutre pour l'éclairage, c'est-à-dire qui ne transmet pas ou peu de rayons lumineux émis par l'ensemble émetteur.

Dans ce même contexte de portion optique d'éclairage et de portion neutre, on peut également distinguer les motifs situés dans la première portion 32 comme des motifs d'un premier type 34 et les motifs 30 situés dans la deuxième portion 36 comme des motifs d'un deuxième type 38. Conformément à ce qui précède, l'ensemble des motifs 30 de la face de sortie 14 peut présenter une structure de Fresnel, avec les motifs du premier type 34 qui diffèrent des motifs du deuxième type 38 par leur valeur d'inclinaison de leur face formant dioptre. Selon une première variante de réalisation, les motifs d'un premier type 34 peuvent présenter une structure de Fresnel tandis que les motifs d'un deuxième type 38 présentent la forme d'un grainage. Dans l'une ou l'autre de ces variantes, le pas de la structure de Fresnel peut être constant sur l'ensemble de la lentille plate.

La figure 7 représente schématiquement une lentille 10 de mise en forme des rayons lumineux et une source lumineuse 7 formant ensemble émetteur de ces rayons, représentés schématiquement en traits fléchés sur les figures.

La source lumineuse 7 émet des rayons lumineux 9 qui sont dirigés vers la lentille 10 de mise en forme, le cas échéant par l'intermédiaire d'un réflecteur tel qu'il a pu être représenté sur les figures 3 à 5. La source lumineuse 7 étant disposée au foyer ou sensiblement au foyer de la lentille, les rayons lumineux 9 sont déviés par la lentille 10 de manière à s'étendre, en sortie de celle-ci, parallèles ou sensiblement parallèles entre eux de façon à former un faisceau lumineux 11 réglementaire.

Tel que précédemment décrit, l'ensemble émetteur et la lentille de mise en forme sont agencés de sorte que les rayons lumineux 9 atteignent essentiellement la première portion 32 de la lentille 10 de mise en forme. De la sorte, la première portion 32 est une portion optique d'éclairage par laquelle passent les rayons et la deuxième portion 36 est une portion neutre pour l'éclairage par laquelle aucun ou très peu de rayons, au regard de la dimension de cette deuxième portion, émis par cette source lumineuse ne passe. Plus particulièrement, moins de 10% des rayons lumineux 9 émis par l'ensemble émetteur atteignent une deuxième portion 36 de la lentille 10, alors que la surface sur laquelle s'étend la deuxième portion est au moins égale à 30% de la surface sur laquelle s'étend la première portion.

La face d'entrée 12 de la lentille 10 de mise en forme peut être lisse, c'est-à-dire qu'elle ne comprend aucun élément optique pouvant affecter la direction des rayons lumineux 9 incidents, ou bien elle peut être munie d'un motif, par exemple une microstructure permettant de gérer la netteté du faisceau pour se conformer à la réglementation.

Comme exposé précédemment, la face de sortie 14 de la lentille 10 comprend quant à elle une pluralité de motifs 30, disposés en cercles concentriques les uns autour des autres, depuis le centre 20 jusqu'à la bordure extérieure 22.

Les motifs 30 de la face de sortie 14 sont caractérisés par une hauteur 52, comprise entre 1 micromètre et 1 millimètre, et qui peut notamment être comprise entre 50 et 300 micromètres. La hauteur 52 d'un motif est la dimension de ce motif selon la direction longitudinale L, mesurée entre la face de sortie 14 et un sommet 42 du motif 30, le sommet 42 étant est le point du motif 30 le plus éloigné de la face de sortie 14, selon la direction longitudinale L.

Les motifs 30 sont agencés sur la face de sortie de manière à être asymétriques en rotation. Plus particulièrement, la hauteur 52 d'un motif 30 peut varier selon la zone de la face de sortie sur laquelle le motif 30 est considéré et la puissance prismatique d'un motif 30 donné diffère selon la zone considérée. A titre d'exemple, dans la première portion 32, la face de sortie est agencée de sorte que la puissance prismatique des motifs évolue en fonction de la position des motifs selon la direction verticale V. Ainsi, la puissance prismatique générée au niveau d'une partie d'un motif 30 disposée dans une partie supérieure 26 de la lentille 10, la notion de partie supérieure étant définie par rapport à l'agencement de la lentille dans le véhicule, est supérieure à la puissance prismatique générée au niveau d'une deuxième partie de ce même motif disposée symétriquement dans la partie inférieure de la lentille 10. On vise ainsi à assurer un éclairage le moins éblouissant possible. Dans la deuxième portion 36, l'asymétrie en rotation des motifs peut présenter une autre forme puisque cette deuxième portion est neutre pour l'éclairage, et dès lors, il peut être générée une asymétrie en rotation consistant en des formes des motifs qui s'étendent de façon non régulière autour d'un axe de concentricité des motifs de la première portion.

Deux points du motif 30 images l'un de l'autre par une symétrie par rapport à un plan vertical passant par le centre 20 ont la même puissance prismatique. En d'autres termes, deux points de la face de sortie 14 disposés sur un même plan parallèle à la direction longitudinale L et à la direction transversale T ont la même puissance prismatique. On comprend que seule la direction verticale a un effet sur la puissance prismatique, et ceci afin de diminuer l'éblouissement potentiel d'un usager de la route en face du véhicule équipé de projecteur selon l'invention.

L'agencement des motifs 30 est également caractérisé par un pas 50 entre deux motifs successifs compris entre 100 micromètres et 1 millimètre, le pas étant mesuré entre le sommet d'un premier motif et le sommet d'un deuxième motif directement voisin. On comprend que le pas entre les motifs peut être régulier sur toute la face de sortie, ou bien, tel que cela est illustré sur la figure 7, le pas entre les motifs 30 successifs peut diminuer à mesure que l'on s'éloigne du centre 20, dans la deuxième portion 36. Ainsi, dans cette deuxième portion 36, les motifs 30 peuvent être particulièrement étroits et former un grainage.

La figure 8 représente la lentille 10 de mise en forme dans une vue de face. Cette disposition illustre particulièrement la forme et la taille de la deuxième portion 36 de la lentille 10 s'étendant latéralement par rapport à la première portion 32 à travers laquelle est illustrée une tache lumineuse 40 représentative de l'émission lumineuse de l'ensemble émetteur en regard de la portion optique d'éclairage de la lentille de mise en forme.

Plus particulièrement, la deuxième portion présente au moins une pointe 37, et cette pointe s'étend à distance de la première portion 32. De la sorte, il est possible de mettre en œuvre cette lentille 10 de mise en forme de rayons dans un module lumineux qui présente une forme effilée pour donner un effet visuel spécifique du véhicule lorsque le module lumineux réalise une fonction d'éclairage.

Tel que cela a été précisé précédemment, la surface sur laquelle s'étend la deuxième portion est au moins égale à 30% de la surface sur laquelle s'étend la première portion. Il est par exemple notable dans le mode de réalisation illustré que la plus grande dimension de la deuxième portion, selon la direction transversale t, est sensiblement égale à la dimension de la première portion selon cette même direction transversale.

Selon une variante non représentée, l'étendue de la deuxième portion 36, formant un espace neutre sur la lentille 10 de mise en forme et donc un espace disponible pour d'autres fonctions que la fonction d'éclairage, peut permettre la mise en œuvre d'une source de lumière additionnelle disposée en regard de la lentille de manière à être située en regard plus spécifiquement de la deuxième portion 36 de cette lentille de mise en forme. De la sorte, la majorité des rayons lumineux émis par la source de lumière additionnelle traversent la lentille 10 de mise en forme par la deuxième portion 36.

Cette source de lumière additionnelle peut être utilisée conjointement à une optique de mise en forme des rayons lumineux émis par la source additionnelle. L'optique de mise en forme est disposée entre ladite source de lumière additionnelle et la deuxième portion 36 de la lentille 10. La combinaison d'une optique de mise en forme et de cette source de lumière additionnelle peut permettre par exemple la réalisation d'une fonction de signalisation, et par exemple de feu de circulation diurne.

Bien entendu, diverses modifications peuvent être apportées par l'homme du métier à la lentille de mise en forme selon l'invention, dès lors que l'on met en œuvre une lentille de mise en forme comprenant au moins deux portions différant l'une de l'autre par la quantité de rayons lumineux passant par l'une ou l'autre des portions, et dont la face de sortie comporte des motifs sur la totalité de sa surface.

En tout état de cause, l'invention ne saurait se limiter au mode de réalisation spécifiquement décrit dans ce document, et s'étend en particulier à tous moyens équivalents et à toute combinaison techniquement opérante de ces moyens.

## Revendications

1. Module lumineux (1) pour l'éclairage et/ou la signalisation d'un véhicule automobile, comportant au moins un ensemble émetteur (6) de lumière et une lentille (10) de mise en forme des rayons lumineux (9) émis par l'ensemble émetteur (6), ladite lentille (10) comportant une face d'entrée (12) des rayons lumineux (9) tournée vers l'ensemble émetteur (6) et une face de sortie (14) opposée à la face d'entrée (12), la lentille (10) de mise en forme des rayons lumineux (9) étant une lentille plate,
ladite lentille (10) et l'ensemble émetteur (6) étant configurés de manière à ce que la face de sortie (14) comporte une première portion (32) et une deuxième portion (36) se distinguant par la quantité de rayons lumineux (9) sortant de la lentille (10) par l'une ou l'autre des portions de sorte que la première portion (32) forme une portion optique d'éclairage et que la deuxième portion (36) forme une portion neutre pour l'éclairage, la deuxième portion (36) s'étendant depuis la première portion (32) de manière à présenter une plus grande dimension qui soit supérieure à l'épaisseur de la lentille (10) plate, **caractérisé en ce que** la face de sortie (14) de la lentille (10) comporte des motifs (30) sur la totalité de sa surface.

2. Module lumineux (1) selon la revendication précédente, **caractérisé en ce que** l'ensemble émetteur (6) et la lentille (10) sont configurés de manière à ce que les rayons lumineux (9) émis par l'ensemble émetteur (6) impactent une portion réduite de la face d'entrée (12) de la lentille (10).

3. Module lumineux (1) selon l'une des revendications précédentes, **caractérisé en ce que** les motifs (30) s'étendent de façon continue sur la face de sortie (14) de la lentille (10).

4. Module lumineux (1) selon l'une des revendications précédentes, **caractérisé en ce que** les motifs (30) sont d'un premier type (34) dans la première portion (32) et d'un deuxième type (38) dans la deuxième portion (36).

5. Module lumineux (1) selon la revendication précédente, **caractérisé en ce que** les motifs (30) du premier type (34) présentent une structure de Fresnel.

6. Module lumineux (1) selon la revendication précédente, **caractérisé en ce que** les motifs (30) du deuxième type (38) forment un grainage de la deuxième portion (36) de la face de sortie (14).

7. Module lumineux (1) selon la revendication 4, **caractérisé en ce que** l'ensemble des motifs (30) présente une structure de Fresnel.

8. Module lumineux (1) selon la revendication précédente, **caractérisé en ce que** les motifs (30) du deuxième type (38) présents dans la deuxième portion (36) comportant une valeur d'inclinaison de leur face différente de celle des motifs (30) du première type (34) présents dans la première portion (32).

9. Module lumineux (1) selon la revendication 7, **caractérisé en ce que** le pas de la structure de Fresnel est constant sur l'ensemble de la lentille plate (10).

10. Module lumineux (1) selon l'une quelconque des revendications 7 à 9, **caractérisé en ce que** la deuxième portion (36) de la lentille (10) présente une forme comportant au moins un sommet (37) anguleux.

11. Module lumineux (1) selon la revendication précédente, **caractérisé en ce que** la face de sortie (14) est recouverte d'un dispositif de modification de la transmission de la lumière.

12. Module lumineux (1) selon la revendication précédente, **caractérisé en ce que** la face d'entrée (12) des rayons est convexe.

13. Module lumineux (1) selon la revendication précédente, **caractérisé en ce qu'**il comporte une source de lumière additionnelle disposée en regard de la lentille (10) de manière à être située dans l'axe de la deuxième portion (36).

14. Module lumineux (1) selon la revendication précédente, **caractérisé en ce qu'**il comporte une optique de mise en forme des rayons entre ladite source de lumière additionnelle et la deuxième portion (36) de la lentille (10).

15. Module lumineux (1) selon la revendication précédente, **caractérisé en ce que** la lentille (10) est inclinée par rapport à un plan perpendiculaire à l'axe optique.

16. Projecteur (150) de véhicule (100) automobile comportant un module lumineux (1) selon l'une des revendications précédentes, **caractérisé en ce qu'**il comporte un boîtier (2) pour loger au moins ce module lumineux (1), ledit boîtier (2) étant fermé d'une glace de protection.

## Patentansprüche

1. Lichtmodul (1) zur Beleuchtung und/oder Signalgebung eines Kraftfahrzeugs, umfassend mindestens eine lichtemittierende Einheit (6) und eine Linse (10) zur Formung der von der emittierenden Einheit (6) emittierten Lichtstrahlen (9), wobei die besagte Linse (10) eine Eintrittsseite (12) der Lichtstrahlen (9) gegenüber der emittierenden Einheit (6) und eine der Eintrittsseite (12) gegenüberliegende Austrittsseite (14) umfasst, wobei die Linse (10) zur Formung der Lichtstrahlen (9) eine flache Linse ist, wobei die Linse (10) und die Emitteranordnung (6) so konfiguriert sind, dass die Austrittsfläche (14) einen ersten Abschnitt (32) und einen zweiten Abschnitt (36) aufweist, die sich in der Menge der Lichtstrahlen (9) unterscheiden, die aus der Linse (10) durch einen der beiden Abschnitte austreten, so dass der erste Abschnitt (32) einen optischen Abschnitt zur Beleuchtung bildet und der zweite Abschnitt (36) einen neutralen Abschnitt zur Beleuchtung bildet, wobei sich der zweite Abschnitt (36) von dem ersten Abschnitt (32) so erstreckt, dass er eine größere Abmessung aufweist, die größer ist als die Dicke der flachen Linse (10), **dadurch gekennzeichnet, dass** die Austrittsfläche (14) der Linse (10) über ihre gesamte Oberfläche Muster (30) aufweist.

2. Lichtmodul (1) nach dem vorhergehenden Anspruch, **dadurch gekennzeichnet, dass** die Emitteranordnung (6) und die Linse (10) so konfiguriert sind, dass die von der Emitteranordnung (6) emittierten Lichtstrahlen (9) auf einen reduzierten Abschnitt der Eintrittsfläche (12) der Linse (10) auftreffen.

3. Lichtmodul (1) nach einem der vorstehenden Ansprüche, **dadurch gekennzeichnet, dass** sich die Muster (30) kontinuierlich über die Austrittsfläche (14) der Linse (10) erstrecken.

4. Lichtmodul (1) gemäß einem der vorhergehenden Ansprüche, **dadurch gekennzeichnet, dass** die Muster (30) von einem ersten Typ (34) im ersten Teil (32) und von einem zweiten Typ (38) im zweiten Teil (36) sind.

5. Lichtmodul (1) nach dem vorhergehenden Anspruch, **dadurch gekennzeichnet, dass** die Muster (30) des ersten Typs (34) eine Fresnel-Struktur aufweisen.

6. Lichtmodul (1) nach dem vorhergehenden Anspruch, **dadurch gekennzeichnet, dass** die Muster (30) des zweiten Typs (38) ein Aufrauen des zweiten Teils (36) der Ausgangsfläche (14) bilden.

7. Lichtmodul (1) nach Anspruch 4, **dadurch gekennzeichnet, dass** alle Muster (30) eine Fresnel-Struktur aufweisen.

8. Lichtmodul (1) nach dem vorhergehenden Anspruch, **dadurch gekennzeichnet, dass** die Muster (30) des zweiten Typs (38), die in dem zweiten Teil (36) vorhanden sind, einen anderen Wert der Neigung ihrer Fläche haben als die Muster (30) des ersten Typs (34), die in dem ersten Teil (32) vorhanden sind.

9. Lichtmodul (1) nach Anspruch 7, **dadurch gekennzeichnet, dass** die Teilung der Fresnel-Struktur über die gesamte flache Linse (10) konstant ist.

10. Lichtmodul (1) nach einem der Ansprüche 7 bis 9, **dadurch gekennzeichnet, dass** der zweite Teil (36) der Linse (10) eine Form aufweist, die mindestens einen winkelförmigen Scheitelpunkt (37) umfasst.

11. Lichtmodul (1) nach dem vorhergehenden Anspruch, **dadurch gekennzeichnet, dass** die Austrittsfläche (14) mit einer Vorrichtung zur Änderung der Lichtdurchlässigkeit bedeckt ist.

12. Lichtmodul (1) nach dem vorhergehenden Anspruch, **dadurch gekennzeichnet, dass** die Eintrittsfläche (12) der Strahlen konvex ist.

13. Lichtmodul (1) nach dem vorhergehenden Anspruch, **dadurch gekennzeichnet, dass** es eine zusätzliche Lichtquelle umfasst, die gegenüber der Linse (10) so angeordnet ist, dass sie sich in der Achse des zweiten Teils (36) befindet.

14. Lichtmodul (1) nach dem vorhergehenden Anspruch, **dadurch gekennzeichnet, dass** es ein optisches System zur Formung der Strahlen zwischen der genannten zusätzlichen Lichtquelle und dem zweiten Teil (36) der Linse (10) umfasst.

15. Lichtmodul (1) nach dem vorhergehenden Anspruch, **dadurch gekennzeichnet, dass** die Linse (10) in Bezug auf eine zur optischen Achse senkrechte Ebene geneigt ist.

16. Kraftfahrzeugscheinwerfer (150) mit einem Lichtmodul (1) nach einem der vorstehenden Ansprüche, **dadurch gekennzeichnet, dass** er ein Gehäuse (2) zur Aufnahme mindestens dieses Lichtmoduls (1) umfasst, wobei das genannte Gehäuse (2) durch eine Schutzscheibe verschlossen ist.

## Claims

1. Light module (1) for lighting and/or signalling a motor vehicle, comprising at least one light emitting assembly (6) and a lens (10) for shaping the light rays (9) emitted by the emitting assembly (6), said lens (10) comprising an entry face (12) for the light rays (9) facing the emitting assembly (6) and an exit face (14) opposite the entry face (12), the lens (10) for shaping the light rays (9) being a flat lens, said lens (10) and the emitter assembly (6) being configured such that the exit face (14) has a first portion (32) and a second portion (36) differing in the amount of light rays (9) exiting the lens (10) through either of the portions such that the first portion (32) forms an optical portion for illumination and the second portion (36) forms a neutral portion for illumination, the second portion (36) extending from the first portion (32) so as to have a larger dimension which is greater than the thickness of the flat lens (10), **characterised in that** the exit face (14) of the lens (10) has patterns (30) over its entire surface.

2. Light module (1) according to the preceding claim, **characterized in that** the emitter assembly (6) and the lens (10) are configured in such a way that the light rays (9) emitted by the emitter assembly (6) impinge on a reduced portion of the entry face (12) of the lens (10).

3. Light module (1) according to one of the preceding claims, **characterized in that** the patterns (30) extend continuously over the exit face (14) of the lens (10).

4. Light module (1) according to one of the preceding claims, **characterized in that** the patterns (30) are of a first type (34) in the first portion (32) and of a second type (38) in the second portion (36).

5. Light module (1) according to the preceding claim, **characterized in that** the patterns (30) of the first type (34) have a Fresnel structure.

6. Light module (1) according to the preceding claim, **characterized in that** the patterns (30) of the second type (38) form a graining of the second portion (36) of the output face (14).

7. Light module (1) according to claim 4, **characterized in that** all the patterns (30) have a Fresnel structure.

8. Light module (1) according to the preceding claim, **characterized in that** the patterns (30) of the second type (38) present in the second portion (36) have a different value of inclination of their face from that of the patterns (30) of the first type (34) present in the first portion (32).

9. Light module (1) according to claim 7, **characterized in that** the pitch of the Fresnel structure is constant over the whole of the flat lens (10).

10. Light module (1) according to any one of claims 7 to 9, **characterized in that** the second portion (36) of the lens (10) has a shape comprising at least one angular vertex (37).

11. Light module (1) according to the preceding claim, **characterized in that** the exit face (14) is covered with a device for modifying the transmission of light.

12. Light module (1) according to the preceding claim, **characterized in that** the entry face (12) for the light rays is convex.

13. Light module (1) according to the preceding claim, **characterized in that** it comprises an additional light source arranged opposite the lens (10) so as to be situated in the axis of the second portion (36).

14. Light module (1) according to the preceding claim, **characterized in that** it comprises an optical system for shaping the rays between the said additional light source and the second portion (36) of the lens (10).

15. Light module (1) according to the preceding claim, **characterized in that** the lens (10) is inclined with respect to a plane perpendicular to the optical axis.

16. Headlamp (150) for a motor vehicle (100) comprising a light module (1) according to one of the preceding claims, **characterised in that** it comprises a housing (2) for housing at least this light module (1), the said housing (2) being closed by a protective glass.
